# EUROPÄISCHE PATENTSCHRIFT

(11) **EP 3 114 366 B1**
(45) Veröffentlichungstag und Bekanntmachung des Hinweises auf die Patenterteilung: **10.01.2018**
(21) Anmeldenummer: 15702636.0
(22) Anmeldetag: 05.02.2015
(51) Int. Cl.: B60G 15/02, F16F 15/02, F16F 15/03, B60G 13/14

(54) **ELEKTROMECHANISCHER ROTATIONSDÄMPFER MIT ZUG- UND DRUCKANSCHLAG**
ELECTROMECHANICAL ROTATIONAL DAMPER WITH TENSION AND COMPRESSION STOP
AMORTISSEUR DE ROTATION ÉLECTROMÉCANIQUE À BUTÉE DE TRACTION ET DE PRESSION

(30) Priorität: 05.03.2014 DE 102014003219
(43) Veröffentlichungstag der Anmeldung: 11.01.2017
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2015/000223
(87) Internationale Veröffentlichungsnummer: WO 2015/131972

(56) Entgegenhaltungen:
- EP-A1- 1 354 731
- DE-A1- 10 117 934
- DE-A1-102009 048 818
- DE-C1- 10 137 230
- DE-C1- 19 747 566

## Beschreibung

Die Erfindung betrifft einen Rotationsdämpfer mit einem Dämpfergehäuse, das einen elektromagnetischen Dämpfermotor umgibt und über ein Befestigungsteil an einer ersten Masse befestigen ist, und mit einem Anlenkhebel, der gegenüber dem Dämpfergehäuse verschwenkbar gelagert und mit einer zweiten Masse verbundenen ist, sowie mit einem Spannungswellengetriebe zur Schwingungsdämpfung, das eine eine Innenverzahnung aufweisende starre Einheit, die mit dem Dämpfergehäuse verbunden ist, und eine eine Außenverzahnung aufweisende flexiblen Einheit, die mit dem Befestigungsteil ist, aufweist, wobei die beiden Einheiten des Spannungswellengetriebes formschlüssig über die Verzahnungen miteinander gekoppelt sind zum Übertragen und/oder Wandeln einer Drehbewegung, und mit einem in der flexiblen Einheit drehbar gelagerten, ovalen Wellengenerator, bei dessen Drehung die flexible Einheit verformt wird.

Ein elektrischer Dämpfer der eingangs erwähnten Art ist aus der WO 2011/042085 A1 bekannt zum Dämpfen der Relativbewegung zwischen einer ersten und einer zweiten Masse. Der Dämpfer umfasst ein Spannungswellengetriebe mit einem durch die Massenbewegung angetriebenen ovalen Wellengenerator, der in ein Getriebe integriert ist, wobei ein einen Stator bildendes erstes Getriebeelement durch die Massebewegung in Drehung versetzt wird, wodurch ein einen Rotor bildendes zweites Getriebeelement, das mit dem ersten Getriebeelement direkt oder indirekt übersetzt gekoppelt ist, gedreht wird. Entweder am ersten oder am zweiten Getriebeelement sind Mittel zur Erzeugung eines Magnetfelds vorgesehen. Das Spannungswellengetriebe umfasst eine flexible Einheit mit einer Außenverzahnung, eine starre Einheit mit einer mit der Außenverzahnung der flexiblen Einheit kämmenden Innenverzahnung und den im Inneren der flexiblen Einheit angeordneten, die flexible Einheit deformierenden ovalen Wellengenerator.

DE 101 37 230 C1 offenbart ein elektrisch angetriebenes Spannungswellengetriebe mit einer eine Verzahnung aufweisenden starren Einheit und einer, ebenfalls eine Verzahnung aufweisenden, flexiblen Einheit, wobei die flexible Einheit eine dynamische elastische Deformation derart erfährt, dass die Verzahnung der flexiblen Einheit mit der Verzahnung der starren Einheit stets in getrennten Bereichen in Eingriff gebracht wird, so dass sich die flexible Einheit relativ zur starren Einheit bewegt, wobei die dynamische elastische Deformation der flexiblen Einheit von magnetischen Kräften hervorgerufen wird, die mit Hilfe elektrischer Ströme beeinflusst werden. Die flexible Einheit weist einen flussführenden Bereich auf, der zur Führung von magnetischen Flüssen ausgestaltet ist und dazu ausreichende Querschnittsflächen hat, wobei über den flussführenden Bereich verlaufende magnetische Flüsse magnetische Kräfte hervorrufen, die auf den flussführenden Bereich und damit direkt auf die flexible Einheit wirken.

DE 197 47 566 C1 betrifft ein piezoangetriebenes Spannungswellengetriebe mit einer eine Verzahnung aufweisenden starren Einheit, sogenannte "Circular Spline", einer ebenfalls eine Verzahnung aufweisenden flexiblen Einheit, sogenannte Flexspline, sowie einem ellipsenförmigen Wellengenerator, der die flexible Einheit derart dynamisch deformiert, dass die Verzahnung der flexiblen Einheit mit der Verzahnung der starren Einheit stets in zwei getrennten Bereichen in Eingriff zu bringen ist, so dass sich die flexible Einheit relativ zur starren Einheit bewegt. Der Wellengenerator hat Piezostellelemente, die ortsfest relativ zur flexiblen Einheit angeordnet sind und die mittels aufeinander abgestimmter Längenänderungen die flexible Einheit deformieren

Der genannte Stand der Technik zeigt zwar sogenannte Spannungswellengetriebe im Zusammenhang mit der Dämpfung in Radaufhängungen von Kraftfahrzeugen, es sind jedoch nicht ausreichend Mittel vorgesehen, um die maximale Auslenkung des Anlenkhebels beim Einfedern des Dämpfers zu begrenzen, was im Zusammenhang mit Dämpfungseinrichtungen für Kraftfahrzeuge erwünscht ist.

EP 1 354 731 B1 betrifft eine Dämpfungsanordnung für eine Fahrzeugaufhängung, die eine Torsionsfedereinheit und einen Rotationsdämpfer umfasst. Um die Auslenkung eines Hebelarms der Radaufhängung zu begrenzen, ist ein nachgiebiger Anschlag vorgesehen, der mit dem Fahrzeugaufbau verbunden ist. Somit ist ein von dem Dämpfer unabhängiger Anschlag zur Begrenzung der Bewegung der Radaufhängung vorgesehen, was als bauaufwendig empfunden wird.

DE 10 117 934 B4 bezieht sich auf einen Antrieb mit einem Motor und mit mindestens einem dem Motor nachgeschalteten Getriebe, insbesondere für Kraftfahrzeuge mit einer automatisch verschließbaren Fahrzeugtür. Um die Abtriebswelle des Getriebes von der Antriebswelle zu entkoppeln, wird ein entkuppelbares Getriebe verwendet, welches ein Getriebegehäuse mit einem zylinderförmigen Hohlraum umfasst, in dem ein mit einem Gehäuse versehenes Umlaufgetriebe mit konzentrischen Getriebean- und -abtriebswellen drehbar gelagert ist. Das Gehäuse des Umlaufgetriebes ist über eine durch einen Aktuator betätigbare Bremseinrichtung in Bezug auf das Getriebegehäuse drehfest fixierbar. Eine derartige Bremseinrichtung hat jedoch nicht die im Zusammenhang mit einem Rotationsdämpfer für eine Kraftfahrzeugaufhängung nicht die erforderliche Zuverlässigkeit.

Im Hinblick auf das Vorstehende liegt der Erfindung die Aufgabe zugrunde, einen Rotationsdämpfer bereitzustellen, der bei kompakter Bauweise eine sichere Begrenzung der Auslenkbewegung des Anlenkhebels gegenüber der Befestigungseinrichtung bzw. dem Dämpfergehäuse gestattet.

Dazu ist der erfindungsgemäße Rotationsdämpfer gekennzeichnet durch eine mit der flexiblen Einheit in Wirkverbindung angeordnete Schlingfeder, die einerseits mit dem Anlenkhebel und andererseits mit dem Befestigungsteil verbunden ist, wobei die Schlingfeder ausgelegt ist, um das Spannungswellengetriebe bei einer vorgegebenen Verschwenkung des Anlenkhebels gegenüber dem Befestigungsteil durch Deformation der flexiblen Einheit zu sperren.

Durch die radiale Verformung der flexiblen Einheit, d. h. der Flexspline, kann sich diese nicht in der starren Einheit, d. h. der Circular Spline, drehen, und das Getriebe entwickelt durch die hohe Übersetzung auf der Flexspline-Seite, die bekanntlich 1:50 oder sogar 1:320 betragen kann, eine sehr hohe Sperrwirkung des Getriebes.

Durch die Verschwenkung des Anlenkhebels gegenüber dem Befestigungsteil werden die Enden der Schlingfeder zueinander hin gezogen, wodurch sich der Innendurchmesser der Schlingfeder soweit verringert, dass sie schließlich mit der flexiblen Einheit (Flexspline) in Kontakt kommt. Die Umschlingung der Feder führt bei einem bestimmten Auslenkwinkel dann zu einer Verformung der flexiblen Einheit, wodurch diese nicht mehr nachgiebig ist, wodurch der Wellengenerator sich nicht mehr bewegen/drehen kann.

Durch die Erfindung wird die Funktionalität des Rotationsdämpfers im Notfall gewährleistet, da kein externer Aktuator erforderlich ist. Der Begrenzungsanschlag ist bei Erreichen eines gewünschten Auslenkungswinkels zwischen dem Anlenkhebel und dem Befestigungsteil klar definiert. Da das Spannungswellengetriebe sehr hohe Überlastungsmomente aufweist, lässt sich die Verformung der flexiblen Einheit durch relativ kleine Kräfte erreichen, wodurch die jeweiligen Bauteile einfach und leicht konstruiert werden können, obwohl durch die Verformung der flexiblen Einheit sich eine sehr hohe Klemmkraft (Sperrwirkung) ergibt, die deutlich höher ist als die Bremswirkung von herkömmlichen Bremseinrichtungen.

Nach einer vorteilhaften Ausgestaltung ist der erfindungsgemäße Rotationsdämpfer dadurch gekennzeichnet, dass die Schlingfeder einerseits über einen ersten Anschlag an der starren Einheit und andererseits über einen zweiten Anschlag an einem an dem Dämpfergehäuse drehbar gelagerten, mit dem Anlenkhebel verbundenen Gehäusedeckel festgelegt ist. Diese einfache und sichere Anbringung der Schlingfeder an der starren Einheit und dem Gehäusedeckel wird eine sichere und zuverlässige Lagerung und Funktion der Schlingfeder sichergestellt.

Nach einer weiteren vorteilhaften Ausgestaltung ist der erfindungsgemäße Rotationsdämpfer dadurch gekennzeichnet, dass die flexiblen Einheit einen zwischen der starren Einheit und dem Wellengenerator liegenden Verzahnungsabschnitt und einen axial zu dem Spannungswellengetriebe verlaufenden Wandabschnitt aufweist, und dass die Schlingfeder um den axialen Wandabschnitt herum angeordnet ist. Mit dieser vorteilhaften Ausgestaltung der flexiblen Einheit lässt sich die Schlingfeder an der flexiblen Einheit anbringen, ohne die Funktion des Spannungswellengetriebes zu beeinträchtigen.

Nach einer weiteren vorteilhaften Ausgestaltung ist der erfindungsgemäße Rotationsdämpfer dadurch gekennzeichnet, dass der axiale Wandabschnitt an seinem von dem Funktionsabschnitt entfernt liegenden Ende eine radialen Wandabschnitt aufweist, der mit dem Gehäusedeckel verbunden ist, wodurch eine einfache und sichere Fixierung der flexiblen Einheit an dem Gehäusedeckel ergibt.

Nach einer weiteren vorteilhaften Ausgestaltung ist der erfindungsgemäße Rotationsdämpfer dadurch gekennzeichnet, dass die Dämpfungseinheit einen elektro-magnetischen Dämpfermotor mit einem Rotor und einem Stator umfasst, wobei der Stator mit dem Dämpfergehäuse verbunden ist und der Rotor an einem mit dem Dämpfergehäuse ortsfest angeordneten Lagerteil drehbar gelagert ist, wodurch sich eine kompakte Anordnung des Dämpfermotors in dem Rotationsdämpfer ergibt.

Nach einer weiteren vorteilhaften Ausgestaltung ist der erfindungsgemäße Rotationsdämpfer dadurch gekennzeichnet, dass der Stator mit der starren Einheit und der Rotor mit dem Wellengenerator verbunden ist, wodurch die Einleitung der Kräfte von dem Anlenkhebel bzw. der Befestigungseinrichtung in das Spannungswellengetriebe in vorteilhafter Weise ermöglicht wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht des erfindungsgemäßen Rotationsdämpfers;
- Fig. 2: eine Schnittdarstellung des erfindungsgemäßen Rotationsdämpfers entlang der Linie II-II in Fig. 1, und
- Fig. 3: eine perspektivische Darstellung der Dämpfungseinheit des erfindungsgemäßen Rotationsdämpfers.

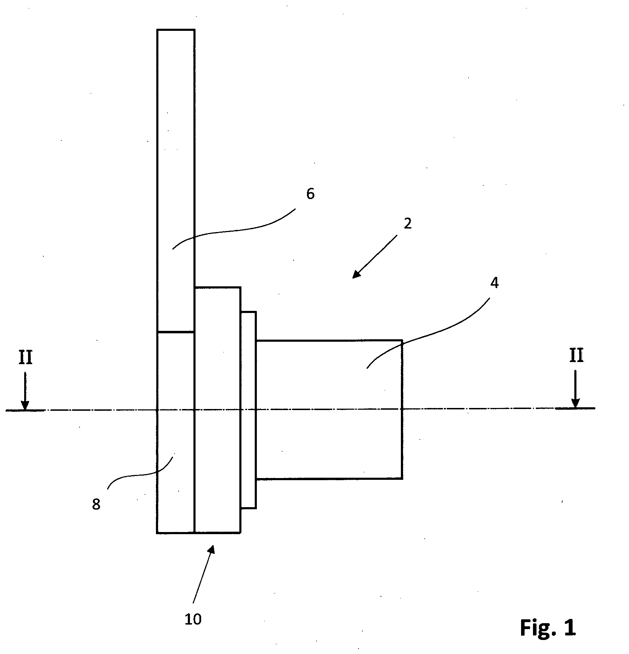

Fig. 1 zeigt eine Seitenansicht des Rotationsdämpfers 2 mit einem Dämpfergehäuse 4, das über ein Befestigungsteil (nicht gezeigt) an einer Masse, d. h. der Radaufhängung oder dem Fahrzeugaufbau, befestigt ist. Ein Anlenkhebel 6 ist gegenüber dem Dämpfergehäuse 4 verschwenkbar gelagert und mit einer zweiten Masse, d. h. dem Fahrzeugaufbau oder der Radaufhängung, verbunden. Der Anlenkhebel 6 ist mit einem Gehäusedeckel 8 verbunden, der drehbar an dem Dämpfergehäuse 4 gelagert ist. Zwischen dem Dämpfergehäuse 4 und dem Gehäusedeckel 8 ist ein Spannungswellengetriebe 10 angeordnet.

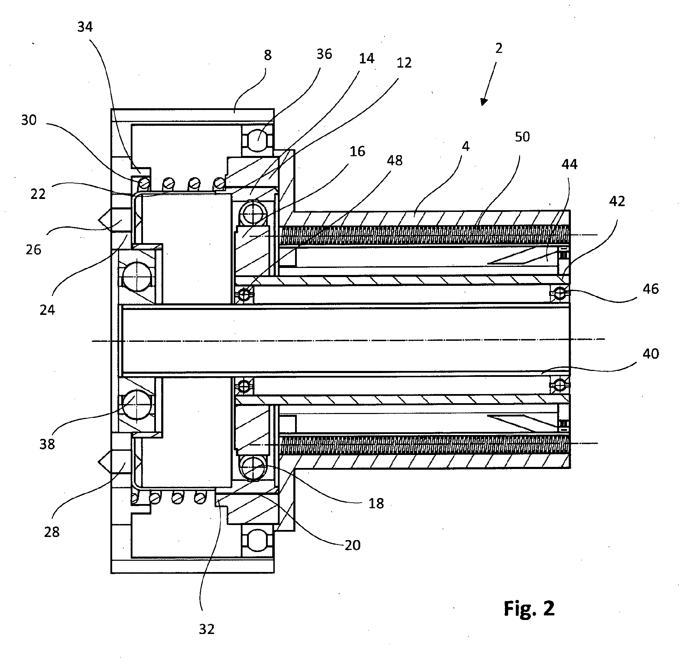

Fig. 2 zeigt einen Schnitt durch den Rotationsdämpfer entlang der Linie II-II der Fig.1. Der Rotationsdämpfer 2 umfasst dabei das Spannungswellengetriebe, das eine eine Innenverzahnung aufweisende starre Einheit 12, die mit dem Dämpfergehäuse 4 verbunden ist, und eine eine Außenverzahnung aufweisende flexible Einheit 14 aufweist, die mit dem Gehäusedeckel 8 verbunden ist, wie noch beschrieben wird. Die beiden Einheiten 12, 14 des Spannungswellengetriebes sind formschlüssig über Verzahnungen miteinander gekoppelt zum Übertragen und/oder Wandeln einer Drehbewegung zwischen dem Anlenkhebel 6 und dem Dämpfergehäuse 4. Innerhalb der flexiblen Einheit 14 ist ein Wellengenerator 16 gegenüber dem Dämpfergehäuse 4 drehbar gelagert, wobei bei Einleitung einer Drehkraft in das Spannungswellengetriebe mit der Drehung des Wellengenerators 16 eine Verformung der flexiblen Einheit 14 erfolgt. Zwischen der flexiblen Einheit und dem Wellengenerator 16 ist ein Wälzlager 18 angeordnet.

Die flexible Einheit 14 weist einen zwischen der starren Einheit 12 und der flexiblen Einheit 14 liegenden Verzahnungsabschnitt 20 auf. An dem Verzahnungsabschnitt 20 schließt sich ein axialer Wandabschnitt 22 an, an den sich ein radialer Wandabschnitt 24 anschließt, der mit dem Gehäusedeckel 4 über Befestigungselement 26, 28, beispielsweise Nieten, verbunden ist.

Eine Schlingfeder 30 ist um den axialen Wandabschnitt 22 der flexiblen Einheit 14 herum geschlungen. Die Schlingfeder 30 ist einerseits über den Gehäusedeckel 8 mit dem Anlenkhebel 6 und andererseits über die starre Einheit 12 und das Dämpfergehäuse 4 mit dem Befestigungsteil (nicht gezeigt) verbunden. Dazu ist die Schlingfeder 30 einerseits über einen ersten Anschlag 32 an der starren Einheit 12 und andererseits über einen zweiten Anschlag 34 an dem an dem Dämpfergehäuse 4 verankert.

Die Schlingfeder 30 ist bei dieser Ausführungsform des Rotationsdämpfers 2 so ausgelegt, dass das Spannungswellengetriebe 10 bei einer vorgegebenen Verschwenkung des Anlenkhebels 6 gegenüber dem Dämpfergehäuse 4 durch Deformation der flexiblen Einheit 14 gesperrt wird.

Wie aus Fig. 2 ersichtlich ist, ist der Gehäusedeckel 8 über ein erstes Rollenlager 36 an der starren Einheit 12 bzw. dem Dämpfergehäuse 4 gelagert. Ein zweites Rollenlager 38 ist zwischen dem Gehäusedeckel 8 und einem Lagerteil 40 angeordnet, der wiederum mit dem Dämpfergehäuse 4 bzw. der mit dem Dämpfergehäuse 4 verbundenen Masse verbunden ist.

In Fig. 2 ist auch ein elektromagnetischen Dämpfermotor gezeigt, der einen Rotor 42 mit einer Magnetanordnung 44 aufweist, der auf dem Lagerteil 40 über zwei Rollenlager 46, 48 drehbar gelagert ist. Der Dämpfermotor weist ferner einen Stator 50 auf, der mit dem Dämpfergehäuse 4 verbunden ist und eine Spulenanordnung aufweist, um den Dämpfermotor zu vervollständigen.

Bei einer Verschwenkung des Anlenkhebels 6 gegenüber dem Dämpfergehäuse 4 wird eine Drehbewegung von dem Gehäusedeckel 8 über den radialen Wandabschnitt 24, den axialen Wandabschnitt 22 und die flexible Einheit 14 in das Spannungswellengetriebe 10 eingeleitet, wodurch sich bei einer Verschwenkung der Rotor 42 gegenüber dem Stator 44 entsprechend der Übersetzung des Spannungswellengetriebes 10 dreht. Durch Bestromung des Dämpfermotors wird einer solchen Verschwenkung die Dämpfungskraft entgegengesetzt.

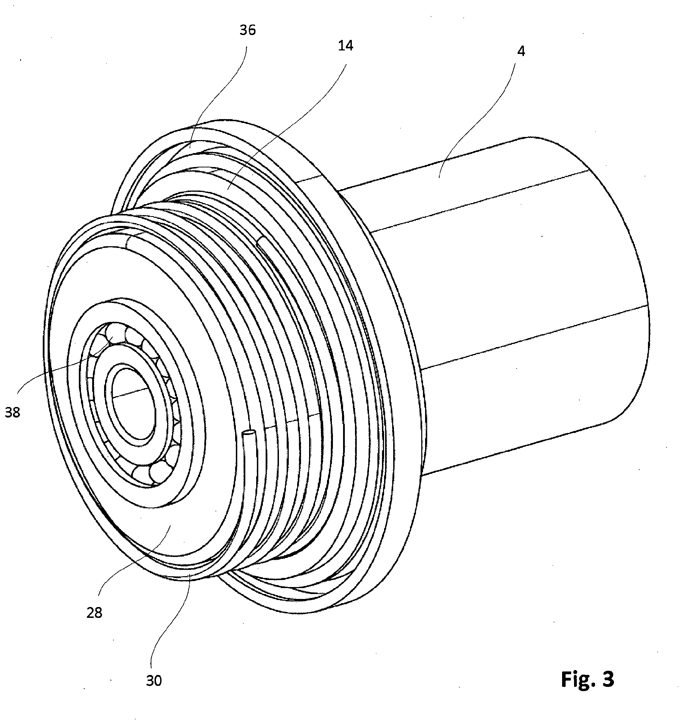

Fig. 3 zeigt eine perspektivische Detaildarstellung des Dämpfergehäuses 4 mit der Schlingfeder 30. Von der flexiblen Einheit 14 sind der radiale Wandabschnitt 24 und der axiale Wandabschnitt 22 zu sehen sowie die starre Einheit 14 mit dem ersten Anschlag 32 für die Schlingfeder 30 gezeigt.

### Bezugszeichenliste

- 2: Rotationsdämpfer
- 4: Dämpfergehäuse
- 6: Anlenkhebel
- 8: Gehäusedeckel
- 10: Spannungswellengetriebe
- 12: starre Einheit
- 14: flexible Einheit
- 16: Wellengenerator
- 18: Wälzlager
- 20: Verzahnungsabschnitt
- 22: axialer Wandabschnitt
- 24: radialer Wandabschnitt
- 26: Befestigungselement
- 28: Befestigungselement
- 30: Schlingfeder
- 32: erster Anschlag
- 34: zweiter Anschlag
- 36: erstes Rollenlager
- 38: zweites Rollenlager
- 40: Lagerteil
- 42: Rotor
- 44: Magnetanornung
- 46: Rollenlager
- 48: Rollenlager
- 50: Stator

## Patentansprüche

1. Rotationsdämpfer(2) mit einem Dämpfergehäuse (4), das einen elektromagnetischen Dämpfermotor umgibt und über ein Befestigungsteil an einer ersten Masse befestigt ist, und mit einem Anlenkhebel (6), der gegenüber dem Dämpfergehäuse (4) verschwenkbar gelagert und mit einer zweiten Masse verbunden ist, sowie mit einem Spannungswellengetriebe (10) zur Schwingungsdämpfung, das eine eine Innenverzahnung aufweisende starre Einheit (12), die mit dem Dämpfergehäuse (4) verbunden ist, und eine eine Außenverzahnung aufweisende flexible Einheit (14), die mit dem Befestigungsteil verbunden ist, aufweist, wobei die beiden Einheiten des Spannungswellengetriebes (10) formschlüssig über die Verzahnungen miteinander gekoppelt sind zum Übertragen und/oder Wandeln einer Drehbewegung, und mit einem in der flexiblen Einheit (14) drehbar gelagerten Wellengenerator, bei dessen Drehung die flexible Einheit verformt wird,
**gekennzeichnet durch**
eine mit der flexiblen Einheit (14) in Wirkverbindung angeordnete Schlingfeder (30), die einerseits mit dem Anlenkhebel (6) und andererseits mit dem Befestigungsteil drehfest verbunden ist, wobei die Schlingfeder (30) ausgelegt ist, um das Spannungswellengetriebe (10) bei einer vorgegebenen Verschwenkung des Anlenkhebels (6) gegenüber dem Befestigungsteil durch Deformation der flexiblen Einheit (14) zu sperren.

2. Rotationsdämpfer (2) nach Anspruch 1, **dadurch gekennzeichnet, dass** die Schlingfeder (30) einerseits über einen ersten Anschlag (32) an der starren Einheit (12) und andererseits über einen zweiten Anschlag (34) an einem an dem Dämpfergehäuse (4) drehbar gelagerten, mit dem Anlenkhebel (6) verbundenen Gehäusedeckel (8) festgelegt ist.

3. Rotationsdämpfer (2) nach Anspruch 1, **dadurch gekennzeichnet, dass** die flexiblen Einheit (14) einen zwischen der starren Einheit (12) und dem Wellengenerator (16) liegenden Verzahnungsabschnitt (20) und einen axial zu dem Spannungswellengetriebe (10) verlaufenden Wandabschnitt (22) aufweist, und dass die Schlingfeder (26) um den axialen Wandabschnitt (22) herum angeordnet ist.

4. Rotationsdämpfer (2) nach Anspruch 4, **dadurch gekennzeichnet, dass** der axiale Wandabschnitt (22) an seinem von dem Verzahnungsabschnitt (20) entfernt liegenden Ende einen radialen Wandabschnitt (24) aufweist, der mit dem Gehäusedeckel (8) verbunden ist

5. Rotationsdämpfer (2) nach Anspruch 1, **dadurch gekennzeichnet, dass** der elektromagnetische Dämpfermotor einen Rotor (42) und einen Stator (50) sowie Mittel zur Erzeugung eines Magnetfelds an dem Rotor (42) und dem Stator (50) umfasst, wobei der Stator (50) mit dem Dämpfergehäuse (4) verbunden ist und der Rotor (42) an einem mit dem Dämpfergehäuse (4) ortsfest angeordneten Lagerteil (40) drehbar gelagert ist.

6. Rotationsdämpfer (2) nach Anspruch 1, **dadurch gekennzeichnet, dass** der Stator (50) mit der starren Einheit (12) und der Rotor (42) mit dem Wellengenerator (16) verbunden ist.

7. Rotationsdämpfer (2) nach Anspruch 1, **dadurch gekennzeichnet, dass** der Stator (50) eine bestrombare Spulenanordnung und der Rotor (42) eine Magnetanordnung (44) aufweist.

## Claims

1. Rotational damper (2) with a damper housing (4) surrounding an electromagnetic damper motor and connected to a first mass via a fastening part, and a coupling lever (6) supported for pivoting relative to the damper housing (4) and connected to a second mass, and a strain wave gearing (10) for damping vibrations comprising a rigid unit (12) having an internal spline and being connected with the damper housing (4), and a flexible unit (14) having an external spline and being connected with the fastening part, wherein the two units of the strain wave gearing (10) are coupled with each other via the splines in a form fitting manner for transmitting and/or converting a rotational movement, and with a wave generator rotatably supported in the flexible unit (14), wherein a rotation of the wave generator causes a deformation of the flexible unit,
**characterized by**
a wrap spring (30) arranged to be operatively connected with the flexible unit (14), the wrap spring being connected on one side with the coupling lever (6) and on the other side with the fastening part in rotative fixed relationship, wherein the wrap spring (30) is configured to block the strain wave gearing (10) by deforming the flexible unit (14) at a predetermined pivoting of the coupling lever (6) relative to the fastening part.

2. Rotational damper (2) according to claim 1, **characterised in that** the wrap spring (30) is fixed on the one side on the rigid unit (12) via a first stop (32) and on the other side on the housing cover (8) via a second stop (34), the housing cover being connected to the coupling lever (6) and rotatably supported on the damper housing (4).

3. Rotational damper (2) according to claim 1, **characterised in that** the flexible unit (14) comprises a gearing section (20) arranged between the rigid unit (12) and the wave generator (16), and a wall section (22) extending axially relative to the strain wave gearing (10), and the wrap spring (26) is arranged about the axially extending wall section (22).

4. Rotational damper (2) according to claim 4, **characterised in that** the axially extending wall section (22) comprises at an end of the axially extending wall section that is distal to the gearing section (20) a radial wall section (24) which is connected with the housing cover (8).

5. Rotational damper (2) according to claim 1, **characterised in that** the electromagnetic damper motor comprises a rotor (42) and a stator (50) and means for generating a magnetic field on the rotor (42) and the stator (50), wherein the stator (50) is connected with the damper housing (4) and the rotor (42) is rotatably supported on a bearing part (40) which is arranged fixed in position relative to the damper housing (4).

6. Rotational damper (2) according to claim 1, **characterised in that** the stator (50) is connected with the rigid unit (12) and the rotor (42) is connected with the wave generator (16).

7. Rotational damper (2) according to claim 1, **characterised in that** the stator (50) comprises a current coil arrangement that can be supplied with current and the rotor (42) comprises a magnet arrangement (44).

## Revendications

1. Amortisseur de rotation (2) comprenant un boîtier d'amortisseur (4), qui entoure un moteur d'amortisseur électromagnétique et est fixé via une pièce de fixation à une première masse et un levier d'articulation (6) qui est monté à pivotement vis-à-vis du boîtier d'amortisseur (4) et est relié à une seconde masse, ainsi qu'une transmission harmonique (10) pour amortir les oscillations, qui présente une unité rigide (12) comportant une denture interne qui est reliée au boîtier d'amortisseur (4) et une unité souple (14) comportant une denture externe qui est reliée à la pièce de fixation, dans lequel les deux unités de la transmission harmonique (10) sont couplées l'une à l'autre mécaniquement via les dentures pour transmettre et/ou transformer un mouvement de rotation, et un générateur d'ondes monté à rotation dans l'unité souple (14), au cours de laquelle rotation l'unité souple est déformée,
**caractérisé par**
un ressort enroulé (30) agencé en coopération avec l'unité souple (14), qui est relié solidaire en rotation, d'une part, au levier d'articulation (6) et, d'autre part, à la pièce de fixation, dans lequel le ressort enroulé (30) est conçu pour bloquer la transmission harmonique (10) lors d'un pivotement préétabli du levier d'articulation (6) par rapport à la pièce de fixation par déformation de l'unité souple (14).

2. Amortisseur de rotation (2) selon la revendication 1, **caractérisé en ce que** le ressort enroulé (30) est fixé, d'une part, via une première butée (32) à l'unité rigide (12) et, d'autre part, via une seconde butée (34) à un couvercle de boîtier (8) monté à rotation sur le boîtier d'amortisseur (4) et relié au levier d'articulation (6).

3. Amortisseur de rotation (2) selon la revendication 1, **caractérisé en ce que** l'unité souple (14) présente une section de denture (20) qui se situe entre l'unité rigide (12) et le générateur d'ondes (16) et une section de paroi (22) s'étendant axialement jusqu'à la transmission harmonique (10) et le ressort enroulé (26) est agencé autour de la section de paroi axiale (22).

4. Amortisseur de rotation (2) selon la revendication 4, **caractérisé en ce que** la section de paroi axiale (22) présente à son extrémité éloignée de la section de denture (20) une section de paroi radiale (24) qui est reliée au couvercle de boîtier (8).

5. Amortisseur de rotation (2) selon la revendication 1, **caractérisé en ce que** le moteur d'amortisseur électromagnétique comprend un rotor (42) et un stator (50) ainsi que des moyens pour produire un champ magnétique sur le rotor (42) et le stator (50), dans lequel le stator (50) est relié au boîtier d'amortisseur (4) et le rotor (42) est monté à rotation sur une partie de palier (40) agencée fixe sur le boîtier d'amortisseur (4).

6. Amortisseur de rotation (2) selon la revendication 1, **caractérisé en ce que** le stator (50) est relié à l'unité rigide (12) et le rotor (42) au générateur d'ondes (16).

7. Amortisseur de rotation (2) selon la revendication 1, **caractérisé en ce que** le stator (50) présente un agencement d'enroulements parcouru par un courant et le rotor (42) un agencement d'aimants (44).
